# EUROPÄISCHE PATENTSCHRIFT

(11) **EP 1 868 150 B1**
(45) Veröffentlichungstag und Bekanntmachung des Hinweises auf die Patenterteilung: **10.08.2011**
(21) Anmeldenummer: 07005795.5
(22) Anmeldetag: 21.03.2007
(51) Int. Cl.: G06Q 10/00, B66C 23/90

(54) **Kraneinsatzplaner**
Crane deployment planner
Planificateur d'utilisation de grue

(30) Priorität: 12.06.2006 DE 102006027202
(43) Veröffentlichungstag der Anmeldung: 19.12.2007
(73) Patentinhaber: Liebherr-Werk Nenzing GmbH, 6710 Nenzing (AT)
(72) Erfinder: Hübler, Armin, 6700 Bludenz (AT); Türtscher, Ronny, 6723 Blons (AT); Battlogg, Rene, 6712 Thüringen (AT)
(74) Vertreter: Laufhütte, Dieter

(56) Entgegenhaltungen:
- EP-A- 0 768 588
- US-A1- 2005 098 520
- TEMELTAS H ET AL: "Hardware in the loop simulation of robot manipulators through Internet in mechatronics education" IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK,NY, US, Bd. CONF. 28, 5. November 2002 (2002-11-05), Seiten 2617-2622, XP010707401 ISBN: 978-0-7803-7474-4

## Beschreibung

Die Erfindung betrifft einen Kraneinsatzplaner, mit welchem der Einsatz eines Krans, insbesondere eines Raupenkrans, im Voraus geplant werden kann.

Aus der US 2005/0098520 A1 ist es bereits für einen Mobilkran mit Superlift bekannt, die Steuerung von einem Betriebsmodus in einen Kraneinsatzmodus umzustellen, in welchem unterschiedliche Beladungszustände des Kranes für unterschiedliche Lastheberaufgaben simuliert werden können. Hierdurch kann der Kranführer vor dem Einsatz genau untersuchen, mit welchen ihm zur Verfügung stehenden Kranparametern er die jeweilige Lastheberaufgabe am besten lösen kann.

Bei bekannten Kraneinsatzplanern werden üblicherweise zuerst der zum Einsatz kommende Kran mit einer entsprechenden Zurüstung ausgewählt sowie Daten zur Last und zum spezifischen Einsatz eingegeben. Im Kraneinsatzplaner kann nun der Einsatz simuliert werden, wobei in bekannten Kraneinsatzplanern hierzu zu allen möglichen Krankonfigurationen und Kranstellungen im Voraus Daten erstellt und dann in Form von tabellarischen Werten hinterlegt werden. Während der Simulation des Einsatzes werden diese Daten in den Zwischenstellungen interpoliert und so die beim Einsatz auftretenden Lastmomente bestimmt. Hierdurch kann bereits bei der Planung des Einsatzes festgestellt werden, ob der Einsatz mit dem ausgewählten Kran und der entsprechenden Zurüstung möglich ist und wie verfahren werden muss, um Maximallastmomente nicht zu überschreiten bzw. die Stabilität des Krans nicht zu gefährden. Bekannte Kraneinsatzplaner sind dabei üblicherweise Softwareprodukte, welche beim jeweiligen Kunden installiert werden und auf dessen Computersystem laufen. Hierdurch ergibt sich ein sehr hoher administrativer Aufwand zur Pflege und Wartung der vielen jeweils beim Kunden installierten Kraneinsatzplaner, wenn z. B. neue Kranbauteile neue Zurüstungsmöglichkeiten für die Kräne ergeben. Dabei ist es von besonderem Nachteil, dass die jeweiligen Daten zur Krankonfiguration und zu den möglichen Kranstellungen dabei für jede Konfiguration und Kranstellung im Voraus bestimmt werden müssen und dann als tabellarische Daten auf die jeweils beim Kunden installierten Kraneinsatzplaner übertragen werden müssen. Zu dem sind die bekannten Kraneinsatzplaner oft kompliziert zu bedienen und unterstützen den Anwender nicht ausreichend bei der Planung und bei der darauf folgenden tatsächlichen Durchführung des geplanten Einsatzes.

Aufgabe der vorliegenden Erfindung ist es deshalb, einen Kraneinsatzplaner zur Verfügung zu stellen, welcher mit geringem Aufwand gewartet werden kann, der einfach zu bedienen ist und dabei die Durchführung des Einsatzes erleichtert.

Erfindungsgemäß wird diese Aufgabe von einem Kraneinsatzplaner gemäß Anspruch 1 gelöst. Dieser weist eine zentrale Planungseinheit auf, welche eine zentrale Datenbank mit Daten zu den einsetzbaren Kränen und ein Berechnungsmodul zur Berechnung der bei dem Einsatz auftretenden Lastmomente umfasst. Dabei werden Simulationen und Berechnung der Einsätze von der zentralen Planungseinheit ausgeführt, während die Ein- und Ausgabe von Daten über Clients erfolgt, wobei die Clients mit der zentralen Planungseinheit über das Internet kommunizieren. Zur Ein- und Ausgabe von Daten auf den Clients können handelsübliche Internetbrowser verwendet werden. Hierdurch muss beim Kunden keine zusätzliche Software auf dessen Clients installiert werden, da sich die komplexe Planungseinheit zentral beim Anbieter des Kraneinsatzplaners befindet. Damit verringert sich der Wartungsaufwand ganz erheblich, da nur die Daten der zentralen Datenbank gepflegt werden müssen bzw. lediglich das Berechnungsmodul der zentralen Planungseinheit auf dem neuesten Stand gehalten werden muss. Die Kunden können dann von ihren Clients aus über das Internet auf die zentrale Planungseinheit zugreifen und dort ihre Einsätze planen. Hierdurch ergibt sich einerseits eine äußerst komfortable Bedienung des Klaneinsatzplaners, wobei aber, z. B. beim Einsatz neuer Kranbauteile zur Zurüstung lediglich die zentrale Planungseinheit gewartet und auf den neusten Stand gebracht werden muss, während die Software beim Kunden nicht gewartet werden muss.

Vorteilhafterweise umfasst die Datenbank dabei neben den Daten zu den einsetzbaren Kränen auch Daten zu einsetzbaren Kranbauteilen zur Zurüstung der Kräne. Dies können bei modernen Kransystemen ganz erhebliche Datenmengen sein, so dass eine zentrale Speicherung dieser Daten von großem Vorteil ist. An Hand der Daten zu den Kränen und zu den Kranbauteilen können dann zur Planung eines Einsatzes die entsprechenden Kräne ausgewählt und mit den notwendigen Kranbauteilen zugerüstet werden. Dabei enthält die Datenbank vorteilhafterweise sowohl Daten zu allen möglichen einsetzbaren Kränen und Kranbauteilen wie auch kundenspezifische Daten zu den jeweils im Fuhrpark des Kunden vorhandenen Kränen und Kranbauteilen. So kann der Kunde schon im Voraus feststellen, ob ein geplanter Einsatz mit seinem eigenen Material durchgeführt werden kann, oder ob gegebenenfalls noch neue Kranbauteile oder Kräne benötigt werden.

Vorteilhafterweise umfasst die Datenbank dabei dreidimensionale geometrische Daten und physikalische Eigenschaften der einsetzbaren Kräne sowie der einsetzbaren Kranbauteile. Durch diese Daten kann der Einsatz geplant werden und eine realistische Simulation erstellt werden.

Weiterhin vorteilhafterweise verwendet das Berechnungsmodul zur Berechnung der beim Einsatz auftretenden Lastmomente ein physikalisches Modell der eingesetzten Kräne und Kranrüstzustände und legt Maximallastmomente fest. Ein solches physikalisches Model der eingesetzten Kräne hat den großen Vorteil, dass nicht im Voraus für jede beliebige Kranstellung jeder beliebigen Kranfiguration entsprechende Daten erstellt und dann in tabellarischen Werten hinterlegt werden müssen, sondern dass die bei einem Einsatz auftretenden Werte real time ermittelt und ausgegeben werden können. Auch kann so auf eine Interpolation der Daten in Zwischenstellungen des Kranes verzichtet werden, was die Genauigkeit und Zuverlässigkeit der Werte erhöht. Insbesondere da sich bei der Vielzahl an einsetzbaren Kranbauteilen leicht ganz erhebliche Zahlen an möglichen Kranrüstzuständen ergeben, erspart die Berechnung durch ein physikalisches Model erheblich Zeit und Kosten. Das physikalische Model ermöglicht damit eine real time Berechnung der Lastmomentbegrenzung (LMB), das heißt eine Ausgabe der Struktur- und Kipplasten, des Bodendrucks sowie weiterer relevanter Daten zu den jeweiligen Krankonfigurationen in den entsprechenden Kranstellungen während des geplanten Einsatzes.

Vorteilhafterweise verwendet dabei das Berechnungsmodul der zentralen Planungseinheit das gleiche physikalische Modell wie die Lastmomentbegrenzung des eingesetzten Kranes. Verwenden sowohl die fest im eingesetzten Kran installierte Lastmomentbegrenzung als auch das Berechnungsmodul das gleiche physikalische Modell, so ist sichergestellt, dass die während der Planung des Einsatzes berechneten Daten mit den während des tatsächlichen Einsatzes auftretenden Daten der Lastmomentbegrenzung übereinstimmen, so dass der Kunde hier vor bösen Überraschungen sicher ist.

Vorteilhafterweise bestimmt die Planungseinheit nach Eingabe eines Lastfalls automatisch die in Frage kommenden Krantypen und Kranrüstzustände. Hierbei ist vorteilhafterweise sowohl eine einfache Suche als auch eine Expertensuche, bei der mehrere Parameter definiert werden können, möglich. So muss der Kunde lediglich Daten zum jeweiligen Lastfall wie das Gewicht der Last, die Hubhöhe und die nötige Hubweite eingeben, und die Planungseinheit berechnet automatisch, welche Krantypen und Kranrüstzustände für diesen Lastfall in Frage kommen. Damit weiß der Kunde sofort, mit welchem Kranrüstzustand der geplante Einsatz möglich ist.

Vorteilhafterweise erfolgt dabei nach Festlegung von Kranposition und Lastposition die Ausrichtung des Kranes zur Aufnahme des Lastobjekts automatisch. Dies vereinfacht die Bedienung erheblich, da so die Kranstellung (z. B. die Drehstellung des Oberwagens und die Winkelstellung des Hauptauslegers bzw. des Nadelauslegers des Kranes) automatisch ermittelt wird und nicht erst vom Kunden eingegeben werden muss. Hierdurch reduzieren sich Planungszeiten ganz erheblich.

Vorteilhafterweise wird dabei zur Planung des Einsatzes ein den Einsatz simulierendes Szenario erstellt. Vorteilhafterweise können der Kran und weitere Objekte im Szenario positioniert werden. Weiterhin vorteilhafterweise können im Szenario Objekte definiert und mit Daten und Attributen verknüpft werden. Hierzu können Name und Farbe des Objektes festgelegt werden, ob es sich um ein Lastobjekt handelt und welche Masse es gegebenenfalls aufweist, ob sich die Last am Haken befindet und welche Koordinaten bzw. Dimensionen das Objekt hat. Ein solches Szenario umfasst dabei üblicherweise den eingesetzten Kran, das Lastobjekt, die Umgebung sowie mögliche Störobjekte. Einfache Störobjekte können dabei vorteilhafterweise aus Standardobjekten wie Quadern, Kugeln, Kegeln, Pyramiden, Zylindern und Prismen zusammengestellt werden. So kann eine realistische Simulation des Einsatzes durchgeführt werden und alle Arbeitsschritte des Einsatzes im Szenario durchgegangen werden.

Weiterhin vorteilhafterweise verwendet die Planungseinheit zur Simulation des Einsatzes ein dreidimensionales Modell. Hierzu können dreidimensionale geometrische Daten des eingesetzten Kranes sowie der eingesetzten Kranbauteile verwendet werden und deren Bewegung in einem dreidimensionalen Szenario bestimmt werden.

Vorteilhafterweise umfasst die Datenbank dabei neben den dreidimensionalen Daten der Kräne dreidimensionale Daten von möglichen Störobjekten, wobei einerseits Standardobjekte zur Verfügung gestellt werden können und andererseits solche Standardobjekte zur größeren Objekten gruppiert und in einer user-abhängigen Bibliothek gespeichert und wiederverwendet werden können. Parallel dazu kann eine allgemeine Bibliothek, welche für alle Benutzer zugänglich ist, ebenfalls komplexere Objekte umfassen.

Vorteilhafterweise können weiterhin dreidimensionale Daten von Objekten aus externen Quellen übernommen werden. Können solche dreidimensionalen Daten von Objekten aus externen Datenquellen importiert werden, kann der Kunde z. B. eigene CAD-Daten der Lastobjekte bzw. von Störobjekten in die Simulation des Lastfalls mit einbeziehen. Diese Daten können dann gegebenenfalls in einer userabhängigen Bibliothek gespeichert werden, wobei auch 3-D Modelle aus allgemein zugänglichen Quellen aus dem Internet herangezogen werden können.

Vorteilhafterweise können Objekte im Szenario über eine Eingabeschnittstelle des Clients, insbesondere eine Maus, individuell im Szenario verschoben oder per Parametereingabe gesteuert werden. So können die Objekte benutzerfreundlich und intuitiv durch ,,drag and drop" verschoben werden oder exakt durch die Parametereingabe positioniert werden.

Vorteilhafterweise wird dabei bei der Simulation des Einsatzes eine Kollisionsprüfung zwischen Kran und möglichen Störobjekten sowie zwischen Kran und Last durchgeführt. So kann festgestellt werden, ob der Kran einschließlich des Lastseiles bei dem geplanten Einsatz mit Störobjekten kollidiert, so dass die Planung schon im Vorfeld des Einsatzes entsprechend angepasst werden kann.

Vorteilhafterweise kann der Lastkreis für die vordere und die hintere Störkante, d.h. für Ausleger und Gegengewicht bzw. Derrick oder Ballastwagen ermittelt und eingeblendet. Zur Darstellung wird dabei im Szenario vorteilhafterweise eine schraffierte Fläche verwendet. Dies ist für den Anwender von großem Interesse, da so die für die Einsatzplanung wichtigen Lastkreise auf einen Blick ersichtlich sind.

Vorteilhafterweise wird ein Raster entlang der Mittelachse des Auslegers eingeblendet. Dies erleichtert die Planung, da anhand des Rasters die Abstände z.B. des Auslegers zum Störobjekt leicht zu erkennen sind.

Vorteilhafterweise wird der Schwerpunkt des Krans ermittelt und eingeblendet. Durch das Einblenden und die Ausgabe des Schwerpunktes kann dieser für die Stabilität wichtige Wert schnell erkannt werden.

Vorteilhafterweise können mehrere unterschiedliche Ansichten eines Arbeitsschrittes gleichzeitig dargestellt werden. Eine solche Darstellung umfasst dann z.B. einen 2-D Aufriss, eine Seitenansicht und einen Grundriss sowie die 3-D Darstellung, wobei jede dieser Darstellungen vergrößert werden kann.

Vorteilhafterweise können dabei einzelne Arbeitsschritte oder Szenarien gespeichert werden. So können alle einsatzrelevanten Daten vorteilhafterweise in Projekten gespeichert werden, wobei zu jedem Projekt beliebig viele Baustellen und zu einer Baustelle beliebig viele Arbeitsschritte gespeichert werden können. So können alle zu einem Kraneinsatz geplanten Kranstellungen mit sämtlichen relevanten Daten als Arbeitsschritte abgespeichert werden. Ebenso können hierzu erstellte Grafiken und relevante Lastmomentbegrenzungsdaten abgespeichert werden.

Vorteilhafterweise wird dabei automatisch ein Protokoll aller Arbeitsschritte eines geplanten Einsatzes erstellt. In einem solchen Protokoll befinden sich dann sämtliche Daten, welche zur Durchführung des Einsatzes nötig sind, so dass nach der Planung eine sichere und zuverlässige Durchführung des Einsatzes möglich ist.

Weiterhin kann vorteilhafterweise eine Filmsequenz mehrerer Arbeitsschritte des geplanten Einsatzes erstellt werden. Beim Abspielen der Filmsequenz werden dann alle Arbeitsschritte abgefahren, was eine einfache Visualisierung des gesamten Einsatzes erlaubt

Beim Kunden sind dabei als Client lediglich 3-D-Viewer zu installieren, auf welchen die 3-D Darstellungen des jeweiligen Szenarios dargestellt werden können. Der Kunde kann sich dabei gegebenenfalls die gewünschte Krankonfiguration durch Auswahl der Kräne und der Kranbauteile und deren Plazierung in einem dreidimensionalen Modell selbst gestalten. Auch kann er das Szenario durch Auswahl oder Erstellung von Störobjekten und der Umgebungsstrukturen selbst erstellen und speichern. Dabei erfolgt lediglich die Ein- und Ausgabe von Daten über den 3-D-Viewer auf dem Client des Kunden, während die gesamte Planung und Berechnung auf der zentralen Planungseinheit ausgeführt wird. Die 3-D-Viewer des Kunden kommunizieren dabei mit der zentralen Planungseinheit über das Internet, so dass einerseits eine effiziente Bedienung und ein ständiger Zugriff auf alle relevanten Daten möglich ist, während andererseits die Wartungskosten für den Kraneinsatzplaner minimiert werden. Auch erhöht sich so die Sicherheit, da alle sicherheitsrelevanten Daten zentral verwaltet werden und alle sicherheitsrelevanten Berechnungen in der zentralen Planungseinheit erfolgen.

So ergibt sich eine einfach zu bedienende und extrem realistische Planung des Einsatzes, wobei durch die automatische Erstellung des Protokolls die Durchführung des tatsächlichen Einsatzes erheblich erleichtert wird.

Weiterhin umfaßt die Erfindung ein Verfahren zur Planung eines Einsatzes eines Krans, insbesondere eines Raupenkrans, mit einem Kraneinsatzplaner mit einer zentralen Planungseinheit, welche eine zentrale Datenbank mit Daten zu den einsetzbaren Kränen und ein Berechnungsmodul zur Berechnung der bei dem Einsatz auftretenden Lastmomente umfasst, mit den Schritten:
Eingabe der Daten eines Lastfalls an einem Clients,
Übertragung der Daten des Lastfalls an die zentrale Planungseinheit über das Internet,
Simulation und Berechnung des Einsatzes durch die zentrale Planungseinheit,
Übertragung der von der Planungseinheit erstellten Daten an den Client über das Internet,
Ausgabe der von der Planungseinheit erstellten Daten auf dem Client.

Dieses Verfahren hat die bereits bei der Beschreibung des Kraneinsatzplaners erwähnten Vorteile, wie z.B. Bedienfreundlichkeit und einfache Wartung. So müssen lediglich die zentrale Planungseinheit und die zentrale Datenbank auf dem neusten Stand gehalten werden, ohne dass Software beim Kunden zu warten wäre. Insbesondere vermindert sich so auch der administrative Aufwand.

Vorteilhafterweise umfaßt dabei die Ausgabe der von der Planungseinheit erstellten Daten auf dem Client eine dreidimensionale Darstellung eines Szenarios.

Weiterhin vorteilhafterweise umfaßt die Simulation und Berechnung des Einsatzes durch die zentrale Planungseinheit eine automatische Ausrichtung des Kranes auf ein Lastobjekt.

Weiterhin vorteilhafterweise können Arbeitsschritte abgespeichert werden und automatisch ein Protokoll aller Arbeitsschritte erstellt werden.

Weiterhin vorteilhafterweise erfolgt die Simulation und Berechnung des Einsatzes durch die zentrale Planungseinheit mit Hilfe eines physikalischen Modells des Kranes.

Die genannten Ausgestaltungen des Verfahrens haben dabei die gleichen Vorteile wie die bereits bei der Beschreibung des Kraneinsatzplaners beschriebenen entsprechenden Merkmale. Desweiteren sind auch alle anderen dort beschriebenen Merkmale des Kraneinsatzplaners und deren Verwendung bei der Planung eines Einsatzes durch das erfindungsgemäße Verfahren von Vorteil.

Die Erfindung wird nun an Hand eines Ausführungsbeispiels näher beschrieben werden. Dabei zeigen:
Figur 1: die allgemeine Struktur des Klaneinsatzplaners,
Figur 2: eine Kranauswahl,
Figur 3: die Ausgabe der zu einem Arbeitsschritt berechneten Werte,
Figur 4: einen ersten Schritt einer Ausrichtung des Kranes,
Figur 5: einen zweiten Schritt der Ausrichtung eines Kranes,
Figur 6: die Berechnung einer Ausladung,
Figur 7: eine Prinzipzeichnung des Protokolls,
Figur 8: die grafische Darstellung eines Arbeitsschrittes und
Figur 9: eine weitere grafische Darstellung eines Arbeitsschrittes.

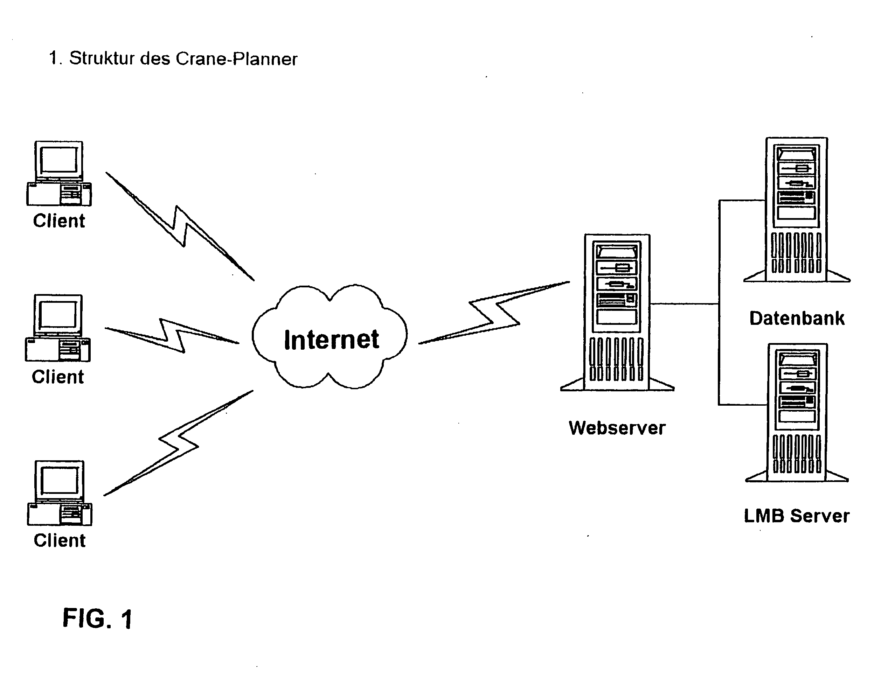

Figur 1 zeigt die Struktur des Kraneinsatzplaners. Rechts in Figur 1 ist die zentrale Planungseinheit dargestellt, welche aus einem Web-Server, einer Datenbank und einem LMB-Server besteht. In der Datenbank sind alle relevanten Daten zu den einsetzbaren Kränen sowie einsetzbaren Kranbauteilen gespeichert sowie die vom Kunden erstellten Objekte und Szenarien. Der LMB-Server umfasst das Berechnungsmodul zur Berechnung der bei dem Einsatz auftretenden Lastmomente, wobei ein physikalisches Modul zum Einsatz kommt, welches dem der Lastmomentbegrenzung der eingesetzten Kräne entspricht. Der Web-Server kommuniziert mit Datenbank und LMB-Server und ist an das Internet angeschlossen, so dass er über das Internet mit dem Clients beim Kunden in Verbindung steht. Auf den Clients der Kunden sind lediglich 3-D-Viewer installiert, durch welche von der Planungseinheit erstellte Daten angezeigt werden können. Weitere Softwareinstallationen auf den Clients sind nicht notwendig, da die gesamte Planung zentral in der Planungseinheit ausgeführt wird.

Zu Beginn der Kraneinsatzplanung wird eine Lastvorgabe definiert, indem relevante Daten zum Lastobjekt wie Last, Hubhöhe, Ausladung, etc. eingegeben werden. Des weiteren kann eine 3-D-Welt (Szenario) mit beliebigen Störobjekten erstellt werden, was eine realistische Simulation des Kraneinsatzes erlaubt. Die einzelnen Objekte in diesem Szenario können dabei mit Attributen versehen werden.

Insbesondere werden dabei folgende Informationen zu einem Objekt verknüpft:
Name
Farbe
Lastobjekt (ja/nein)
   Wenn Lastobjekt: Masse des Objekts
Last am Haken (ja/nein)
Verdrehwinkel des Objekts
Koordinaten
Dimension
Oberflächenstruktur

Neben den Lastobjekten können auch Störobjekte erstellt werden, welche die Umgebung des Einsatzes darstellen. Dabei können einfache Störobjekte aus Standardobjekten wie Quadern, Kugeln, Kegeln, Pyramiden, Zylindern und Prismen zusammengestellt werden. Weiterhin kann eine Konstellation solcher Standortobjekte gruppiert und in einer userabhängigen Bibliothek gespeichert und damit wiederverwendet werden. Parallel dazu gibt es auch eine allgemeine Bibliothek, welche für alle Benutzer zugänglich ist.

Des weiteren können Daten auch aus externen Datenquellen importiert werden. Insbesondere können hier 3-D Daten von CAD-Modellen des Kunden sowie 3-D Modelle aus dem Internet (z. B. für LKW) herangezogen werden. Auch diese 3-D Daten können als Last- oder Störobjekte in das Szenario integriert werden. Hierdurch ergibt sich im Szenario eine äußerst realistische Simulation des Einsatzortes.

An Hand des vorher definierten Lastfalls kann das Programm automatisch die für den Kraneinsatz in Frage kommenden Krantypen und Krankonfigurationen ermitteln. Hierbei gibt es die Möglichkeit, die richtige Krankonfiguration entweder per einfacher Suche mit nur einem oder wenigen Parametern zu suchen oder per Expertensuche, bei der mehrere Parameter des Lastfalls definierbar sind. Ebenso ist eine manuelle Zusammenstellung des Krans und der Zurüstung möglich, wobei der Benutzer dreidimensional dargestellte Kranbauteile und Kräne im 3-D-Viewer zum gewünschten Kranrüstzustand zusammenstellen kann.

Der ausgewählte Kran wird nun dreidimensionell im Szenario dargestellt. Im 3D-Szenario können auch diverse Störobjekte eingeplant und positioniert werden. Dabei können Kran sowie Stör- und Lastobjekte einfach mit der Maus im Szenario verschoben werden, was eine besonders einfache und intuitive Bedienung erlaubt. Die einzelnen Objekte können aber auch per Parametereingabe gesteuert werden. Die Planungseinheit berechnet dann automatisch die zur Aufnahme des Lastobjekts notwendige Kranstellung, wobei z. B. die Drehstellung des Oberwagens und die Winkelstellung des Hauptauslegers sowie des Nadelauslegers ermittelt werden kann.

Das Berechnungsmodul mit der LMB ermittelt nun zu jedem Arbeitsschritt parallel die entsprechenden Krandaten wie Kipplast, Strukturlast, Bodendruck, Ausnutzung usw. und gibt diese aus. Hierbei werden insbesondere Struktur- und Kipplasten ermittelt und mit Maximalwerten verglichen, welche durch die Verwendung der gleichen Lastmomentbegrenzung wie im eingesetzten Kran exakt den im tatsächlichen Einsatz auftretenden Werten entsprechen.

Dabei wird auch eine Kollisionsprüfung von Kran samt Seil und Last mit den Störobjekten im Szenario durchgeführt, so dass sichergestellt ist, dass die geplanten Arbeitsschritte tatsächlich durchgeführt werden können.

Dabei wird auch der Lastkreis für die vordere und die hintere Störkante, d.h. Ausleger und Gegengewicht bzw. Derrick oder Ballastwagen, ermittelt und im Szenario als Rasterfläche dargestellt. Auch kann der Schwerpunkt des Kranes ermittelt und eingeblendet bzw. ausgegeben werden.

Zur Erleichterung der Planung kann ein Raster direkt entlang der Mittelachse des Auslegers eingeblendet werden. Anhand des Rasters können Abstände z.B. des Auslegers zum Störobjekt entnommen werden.

Parallel zur Kraneinsatzplanung können sämtliche Arbeitsschritte abgespeichert werden und dienen dann zur automatischen Erstellung eines Protokolls über den Kraneinsatz. Die von der LMB ermittelten Daten werden über das Internet zu den 3-D-Viewern übertragen, wo das entsprechende Szenario mit der Kranstellung dreidimensional dargestellt wird. Hierbei werden mehrere unterschiedliche Ansichten des Arbeitschritts gleichzeitig dargestellt, wie 2D Aufriss, Seitenansicht und Grundriss sowie 3-D-Darstellung. Jede dieser Ansichten kann auch vergrößert werden. Des weiteren werden alle relevanten Daten des Arbeitsschrittes dargestellt. Dabei kann ein Protokoll aller Arbeitsschritte mit sämtlichen relevanten LMB-Daten und Grafiken erstellt werden, welche dann bei der Durchführung des Einsatzes Schritt für Schritt abgearbeitet werden können. Weiterhin kann eine Filmsequenz aller Arbeitsschritte generiert werden, die somit einen realistischen Eindruck vom Ablauf des Einsatzes gibt.

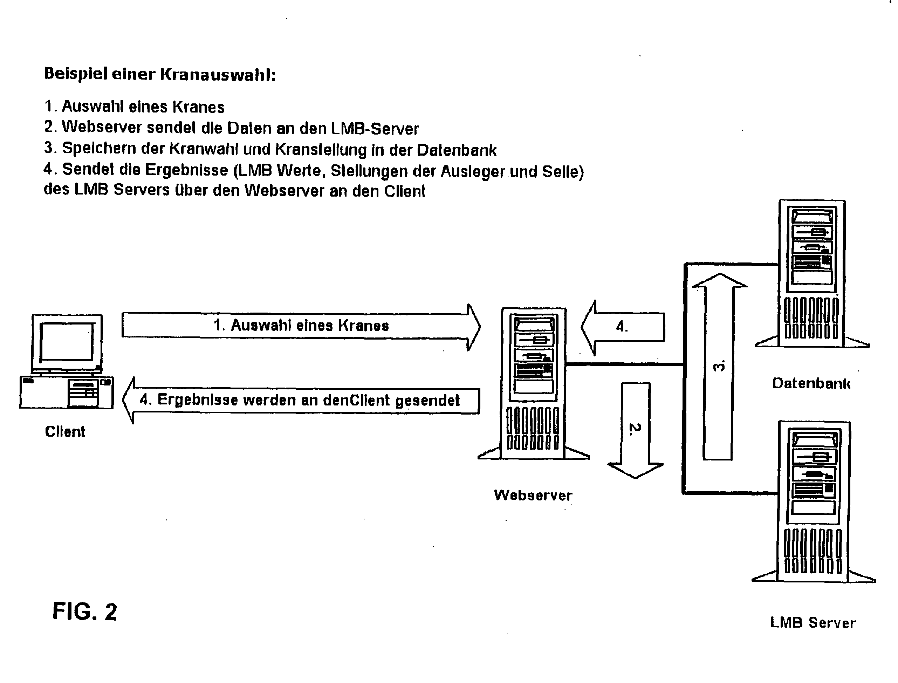

Figur 2 zeigt beispielhaft eine Kranauswahl, wobei es sich in diesem Fall um eine manuelle Auswahl und Zusammenstellung handelt. Hierzu wählt in einem ersten Schritt der Benutzer des Kraneinsatzplaners aus einer vom Kraneinsatzplaner zur Verfügung gestellten Liste den entsprechenden Kran mit der jeweiligen Zurüstung aus. Diese Daten werden dann vom Client zum Web-Server der zentralen Planungseinheit gesendet, wo sie vom Web-Server empfangen und an den LMB-Server weitergeleitet werden. Der LMB-Server erstellt aus den Daten zur Kranauswahl das entsprechende physikalische Kranmodell und speichert Kranauswahl und Kranstellung in der Datenbank. Für jeden Arbeitsschritt werden dabei vom LMB-Server alle relevanten Daten berechnet, gespeichert und über den Web-Server an den Client zurückgesendet. Die Ergebnisse der Berechnung wie z. B. die LMB-Werte, die Stellung der Ausleger und der Seile werden vom Client empfangen und in Form von 3-D Grafiken und Listen ausgegeben.

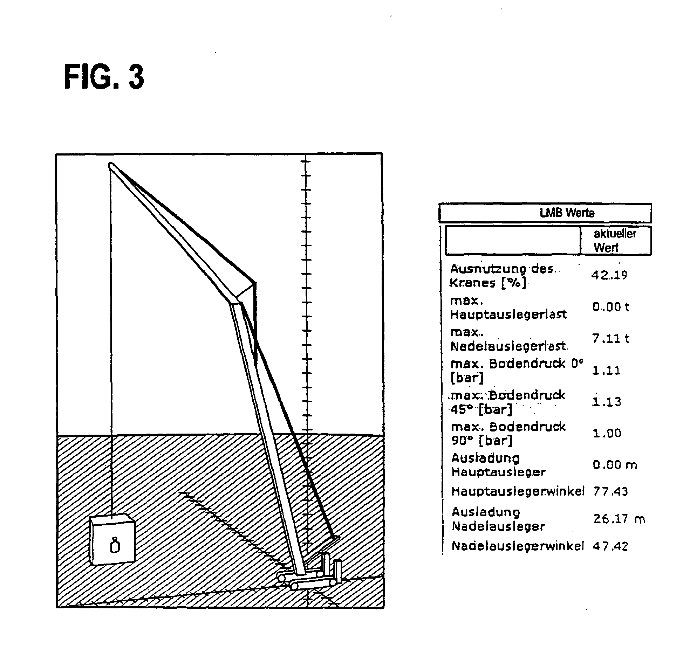

In Figur 3 ist dabei eine typische Ausgabe auf dem Client zu sehen. Links ist in einem 3-D Bild das Szenario mit dem Raupenkran und der Last dargestellt, während rechts relevante Daten wie die Ausnutzung des Kranes, die Ausladung, der Bodendruck, sowie die Winkel der Ausleger angegeben sind. Hierdurch wird die Position des Kranes und der Last einerseits grafisch schnell verständlich dargestellt, wobei andererseits auch alle relevanten Daten detailliert angegeben werden.

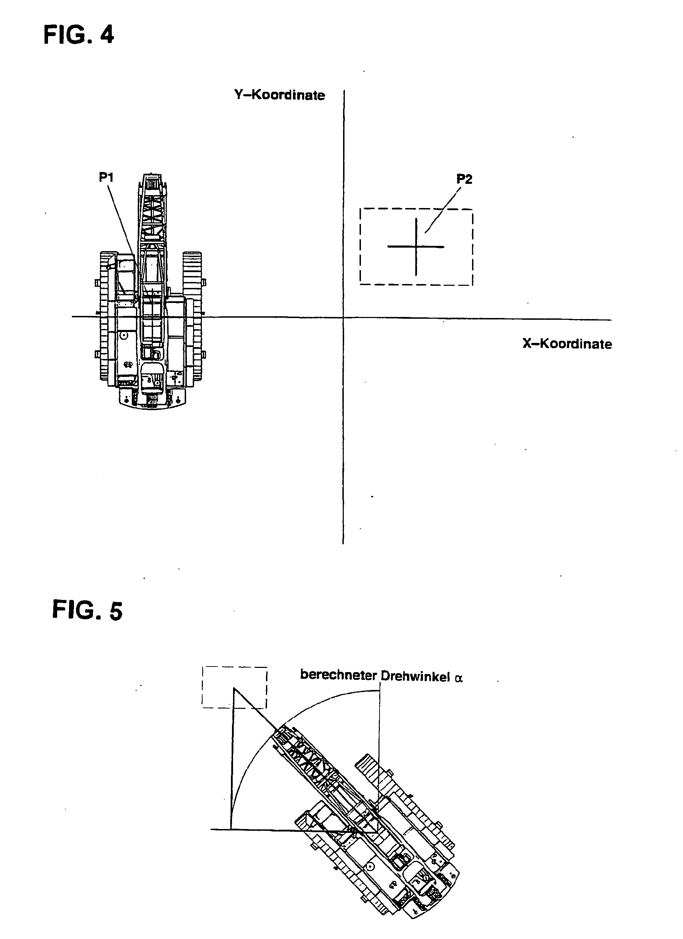

Figur 4 und Figur 5 zeigen die automatische Ausrichtung des Kranes nach der Last. Nachdem, wie in Figur 4 gezeigt, die Koordinaten P1 des Kranes sowie die Koordinaten P2 des Lastobjekts eingegeben wurden, berechnet diese Funktion wie in Figur 5 gezeigt den Drehwinkel *α* der Drehung des Oberwagens sowie die Auslegerstellung für die benötigte Ausladung zwischen P1 und P2 . Da die Positionen von Kran und Lastobjekt bereits gegeben sind, kann der Drehwinkel exakt berechnet werden, ohne dass der Benutzter hier selbst tätig werden müßte.

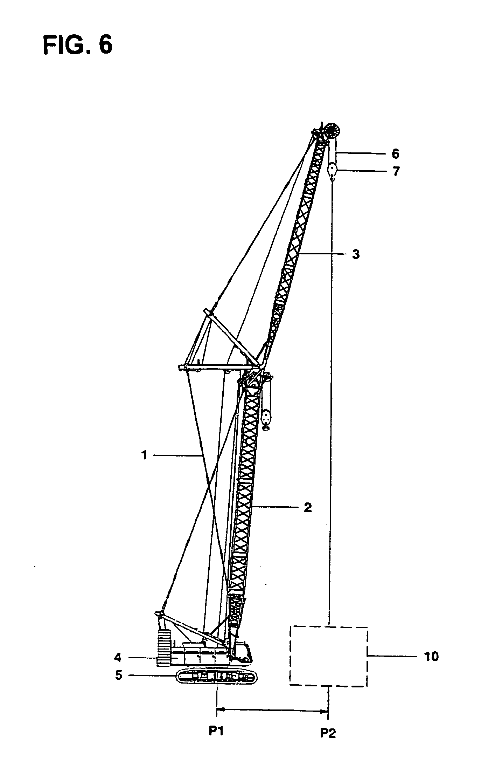

Anhand von Figur 6 kann nun die Berechnung der Ausladung eines Krans 1 beschrieben werden. Der Kran 1 besteht dabei aus einem Unterwagen 5 mit Raupenantrieb sowie einem drehbaren Oberwagen 4, auf dem ein Hauptausleger 2 mit einem Nadelausleger 3 angelenkt ist. Das Lastobjekt 10 soll dabei über ein Seil 6 und eine Seilrolle 7 gehoben werden. Wie bereits bezüglich Figuren 4 und 5 beschrieben, kann die Drehstellung des Oberwagens 4 des am Ort P1 befindlichen Krans 1 bezüglich des am Ort P2 befindlichen Lastobjekts 10 automatisch bestimmt werden.

Zur Berechnung der Ausladung gibt es dabei einen automatischen und eine manuellen Berechnungsmodus, wobei die zwei zu bestimmenden Variablen der Kippwinkel des Hauptauslegers sowie der Kippwinkel des Nadelauslegers sind.

In dem automatischen Berechnungsmodus werden die Winkel von Hauptausleger und Nadelausleger automatisch verändert, um die gewünschte Ausladung zu erreichen. Der Nadelauslegerwinkel ist dabei immer um 10° versetzt zum Hauptauslegerwinkel, um eine maximale Traglast des Kranes zu gewährleisten.

Im manuellen Berechnungsmodus kann der Winkelbereich des Hauptauslegers eingeschränkt werden, um z. B. Kollisionen mit Störobjekten zu vermeiden. Ist der maximale Hauptauslegerwinkel erreicht, wird deshalb versucht, die Ausladung über den Winkel des Nadelauslegers zu erreichen.

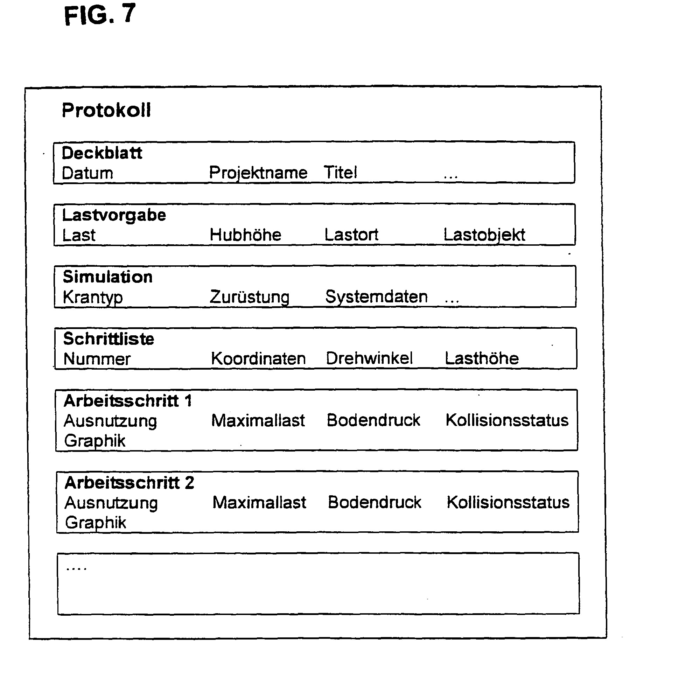

Alle Daten und Arbeitsschritte können dabei abgespeichert werden, wobei automatisch ein Protokoll des Kraneinsatzes erstellt wird. Figur 7 zeigt schematisch den Aufbau eines solchen Protokolls.

Das Deckblatt des Protokolls enthält allgemeine Angaben des Projektes wie z. B. das Datum, den Projektnamen, den Dokumententitel, die Dokumentennummer, die Version und den Ersteller.

Sodann werden detaillierte Angaben zur Lastvorgabe ausgegeben. Diese umfassen einerseits detaillierte Angaben zur Last, zur Hubhöhe (Abstände von Seilrolle bis zur Last) sowie Angaben zum Lastort und zum Lastobjekt, wobei beim Lastobjekt insbesondere Angaben zu den Abmessungen und zum Drehwinkel gemacht werden können.

Im Simulationsabschnitt werden alle relevanten Krandaten, welche der Kranfahrer für den geplanten Hub benötigt, ausgedruckt. Insbesondere umfassen diese Krandaten den Krantyp, die Betriebsart, Angaben zur Zurüstung und zum Lastort. Insbesondere werden dabei auch Daten zum Hautpausleger, zum Nadelausleger und zur Ballastierung gemacht.

Als nächstes enthält das Protokoll eine Schrittliste aller Arbeitsschritte, welche die wichtigsten Daten zu den Arbeitsschritten in tabellarischer Form enthält. Da ein Einsatz vielmals aus mehreren Schritten mit unterschiedlichen Lasten besteht, sind in der Schrittliste alle geplanten Arbeitsschritte mit der jeweiligen Kranstellung, den Drehwinkeln sowie Last- und Hakenhöhe in Form einer Tabelle angegeben. Die einzelnen Arbeitsschritte sind dabei zur einfachen Wiedererkennung durchnummeriert.

Sodann enthält das Protokoll detaillierte Angaben zu den einzelnen Arbeitsschritten. Hier werden zusätzlich Ausnutzung, Maximallast, Bodendruck, Kollisionsstatus als aktuelle und als Maximalwerte angegeben. Diese werden für jeden Arbeitsschritt einerseits tabellarisch ausgegeben als auch in einer Grafik dargestellt. Das Protokoll enthält dabei zu jedem einzelnen Arbeitsschritt diese detaillierten Angaben.

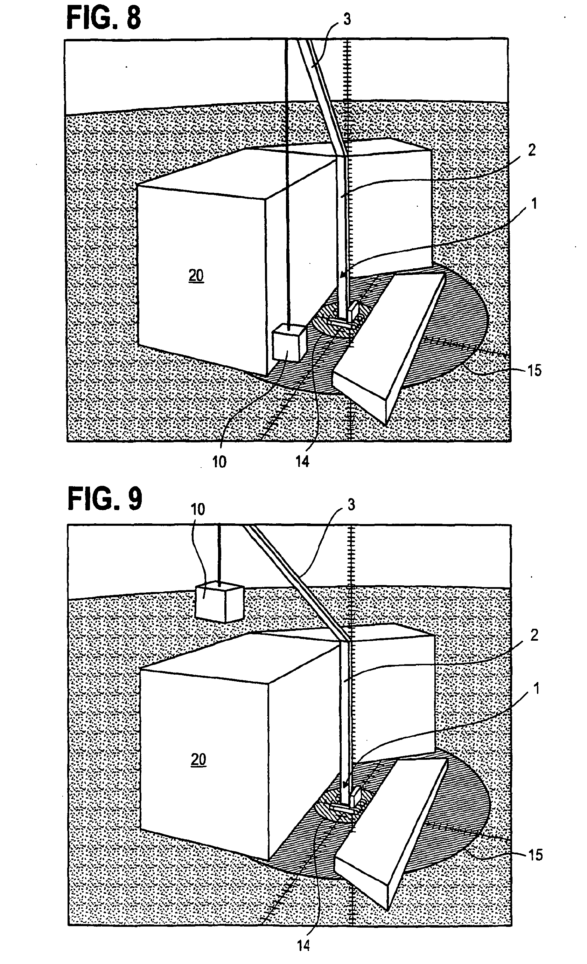

In Figur 8 und Figur 9 sind grafische Darstellungen zweier Arbeitsschritte dargestellt. Beide grafischen Darstellungen zeigen den Kran 1 mit Hauptausleger 2 und Nadelausleger 3 in unterschiedlichen Arbeitspositionen in einem dreidimensionalen Szenario. Dabei sind neben dem Kran 1 die Last 10 sowie Störobjekte 20 angegeben, so dass der geplante Arbeitsschritt auf einen Blick erfasst werden kann. Ebenso zu erkennen sind die Lastkreise für die vordere und die hintere Störkante, welche als schraffierte Flächen mit Rändern 14 und 15 im 3-D Szenario dargestellt werden.

## Patentansprüche

1. Kraneinsatzplaner zur Planung eines Einsatzes eines Krans, insbesondere eines Raupenkrans, mit einer zentralen Planungseinheit, welche eine zentrale Datenbank mit Daten zu den einsetzbaren Kränen und ein Berechnungsmodul zur Berechnung der bei dem Einsatz auftretenden Lastmomente umfasst, wobei die Simulation und Berechnung der Einsätze von der zentralen Planungseinheit ausgeführt wird und die Ein- und Ausgabe von Daten über Clients erfolgt, wobei die Clients mit der zentralen Planungseinheit über das Internet kommunizieren.

2. Kraneinsatzplaner nach Anspruch 1, wobei die Datenbank Daten zu einsetzbaren Kranbauteilen zur Zurüstung der Kräne enthält.

3. Kraneinsatzplaner nach Anspruch 2, wobei die Datenbank dreidimensionale geometrische Daten und physikalische Eigenschaften der einsetzbaren Kräne sowie der einsetzbaren Kranbauteile enthält.

4. Kraneinsatzplaner nach Anspruch 1, wobei das Berechnungsmodul zur Berechnung der bei dem Einsatz auftretenden Lastmomente ein physikalisches Modell der eingesetzten Kräne und Kranrüstzustände verwendet und Maximallastmomente festlegt.

5. Kraneinsatzplaner nach Anspruch 4, wobei das Berechnungsmodul das gleiche physikalische Modell wie die Lastmomentbegrenzung des eingesetzten Kranes verwendet.

6. Kraneinsatzplaner nach Anspruch 1, wobei die Planungseinheit nach Eingabe eines Lastfalls automatisch die in Frage kommenden Krantypen und Kranrüstzustände bestimmt.

7. Kraneinsatzplaner nach Anspruch 1, wobei nach Festlegung von Kranposition und Lastposition die Ausrichtung des Kranes zur Aufnahme des Lastobjekts automatisch erfolgt.

8. Kraneinsatzplaner nach Anspruch 1, wobei zur Planung des Einsatzes ein den Einsatz simulierendes Szenario erstellt wird.

9. Kraneinsatzplaner nach Anspruch 8, wobei der Kran und weitere Objekte im Szenario positioniert werden.

10. Kraneinsatzplaner nach Anspruch 8 oder 9, wobei Objekte im Szenario mit Daten und Attributen verknüpft werden können.

11. Kraneinsatzplaner nach Anspruch 1, wobei die Planungseinheit zur Simulation des Einsatzes ein dreidimensionales Modell verwendet.

12. Kraneinsatzplaner nach Anspruch 1, wobei die Datenbank dreidimensionale Daten von möglichen Störobjekten enthält.

13. Kraneinsatzplaner nach Anspruch 1, wobei dreidimensionale Daten von Objekten aus externen Quellen übernommen werden können.

14. Kraneinsatzplaner nach Anspruch 8, wobei Objekte im Szenario über eine Eingabeschnittstelle des Clients, insbesondere eine Maus, individuell im Szenario verschoben werden können oder per Parametereingabe gesteuert werden.

15. Kraneinsatzplaner nach Anspruch 11, wobei eine Kollisionsprüfung zwischen Kran und möglichen Störobjekten sowie zwischen Kran und Last bei der Planung des Einsatzes durchgeführt wird.

16. Kraneinsatzplaner nach Anspruch 1, wobei ein Lastkreis für die vordere und die hintere Störkante ermittelt und eingeblendet wird.

17. Kraneinsatzplaner nach Anspruch 1, wobei ein Raster entlang der Mittelachse des Auslegers eingeblendet wird.

18. Kraneinsatzplaner nach Anspruch 1, wobei der Schwerpunkt des Krans ermittelt und eingeblendet wird.

19. Kraneinsatzplaner nach Anspruch 1, wobei mehrere unterschiedliche Ansichten eines Arbeitsschrittes gleichzeitig dargestellt werden.

20. Kraneinsatzplaner nach Anspruch 1, wobei einzelne Arbeitsschritte oder Szenarien gespeichert werden können.

21. Kraneinsatzplaner nach Anspruch 1, wobei automatisch ein Protokoll aller Arbeitsschritte des geplanten Einsatzes erstellt wird.

22. Kraneinsatzplaner nach Anspruch 1, wobei eine Filmsequenz mehrerer Arbeitsschritte des geplanten Einsatzes erstellt wird.

23. Verfahren zur Planung eines Einsatzes eines Krans, insbesondere eines Raupenkrans, mit einem Kraneinsatzplaner mit einer zentralen Planungseinheit, welche eine zentrale Datenbank mit Daten zu den einsetzbaren Kränen und ein Berechnungsmodul zur Berechnung der bei dem Einsatz auftretenden Lastmomente umfasst, mit den Schritten:
Eingabe der Daten eines Lastfalls an einem Client,
Übertragung der Daten des Lastfalls an die zentrale Planungseinheit über das Internet,
Simulation und Berechnung des Einsatzes durch die zentrale Planungseinheit,
Übertragung der von der Planungseinheit erstellten Daten an den Client über das Internet,
Ausgabe der von der Planungseinheit erstellten Daten auf dem Client.

24. Verfahren nach Anspruch 23, wobei die Ausgabe der von der Planungseinheit erstellten Daten auf dem Client eine dreidimensionale Darstellung eines Szenarios umfaßt.

25. Verfahren nach Anspruch 23, wobei die Simulation und Berechnung des Einsatzes durch die zentrale Planungseinheit eine automatische Ausrichtung des Kranes auf ein Lastobjekt umfaßt.

26. Verfahren nach Anspruch 23, wobei Arbeitsschritte abgespeichert werden können.

27. Verfahren nach Anspruch 23, wobei automatisch ein Protokoll aller Arbeitsschritte erstellt wird.

28. Verfahren nach Anspruch 23, wobei die Simulation und Berechnung des Einsatzes durch die zentrale Planungseinheit mit Hilfe eines physikalischen Modells des Kranes erfolgt.

## Claims

1. Crane deployment planner for planning deployment of a crane, in particular a crawler crane, having a central planning unit which comprises a central database containing data relating to the cranes which can be used and a calculation module for calculating the load torques which occur during deployment, wherein the deployments are simulated and calculated by the central planning unit, and data are input and output via clients, wherein the clients communicate with the central planning unit via the Internet.

2. Crane deployment planner according to Claim 1, wherein the database contains data relating to crane parts which can be used to equip the cranes.

3. Crane deployment planner according to Claim 2, wherein the database contains three-dimensional geometrical data and physical properties of the cranes which can be used and of the crane parts which can be used.

4. Crane deployment planner according to Claim 1, wherein the calculation module for calculating the load torques which occur during deployment uses a physical model of the cranes and crane equipment states used and determines maximum load torques.

5. Crane deployment planner according to Claim 4, wherein the calculation module uses the same physical model as the load torque limitation of the crane used.

6. Crane deployment planner according to Claim 1, wherein the planning unit automatically determines the crane types and crane equipment states in question after a load has been input.

7. Crane deployment planner according to Claim 1, wherein the crane is automatically oriented in order to receive the load object after the crane position and the load position have been determined.

8. Crane deployment planner according to Claim 1, wherein a scenario which simulates the deployment is created in order to plan the deployment.

9. Crane deployment planner according to Claim 8, wherein the crane and further objects are positioned in the scenario.

10. Crane deployment planner according to Claim 8 or 9, wherein objects in the scenario can be linked to data and attributes.

11. Crane deployment planner according to Claim 1, wherein the planning unit uses a three-dimensional model to simulate the deployment.

12. Crane deployment planner according to Claim 1, wherein the database contains three-dimensional data relating to possible disruptive objects.

13. Crane deployment planner according to Claim 1, wherein three-dimensional data relating to objects can be taken from external sources.

14. Crane deployment planner according to Claim 8, wherein objects in the scenario can be individually moved in the scenario using an input interface of the client, in particular a mouse, or are controlled by inputting parameters.

15. Crane deployment planner according to Claim 11, wherein a collision test between the crane and possible disruptive objects and between the crane and the load is carried out when planning the deployment.

16. Crane deployment planner according to Claim 1, wherein a load circuit for the front and rear disruptive edges is determined and inserted.

17. Crane deployment planner according to Claim 1, wherein a grid is inserted along the central axis of the jib.

18. Crane deployment planner according to Claim 1, wherein the centre of gravity of the crane is determined and inserted.

19. Crane deployment planner according to Claim 1, wherein a plurality of different views of a work step are displayed at the same time.

20. Crane deployment planner according to Claim 1, wherein individual work steps or scenarios can be stored.

21. Crane deployment planner according to Claim 1, wherein a protocol of all work steps of the planned deployment is automatically created.

22. Crane deployment planner according to Claim 1, wherein a film sequence of a plurality of work steps of the planned deployment is created.

23. Method for planning deployment of a crane, in particular a crawler crane, using a crane deployment planner having a central planning unit which comprises a central database containing data relating to the cranes which can be used and a calculation module for calculating the load torques which occur during deployment, said method having the following steps:
the data relating to a load are input on a client,
the data relating to the load are transmitted to the central planning unit via the Internet,
the central planning unit simulates and calculates the deployment,
the data created by the planning unit are transmitted to the client via the Internet,
the data created by the planning unit are output on the client.

24. Method according to Claim 23, wherein the output of the data created by the planning unit on the client comprises a three-dimensional representation of a scenario.

25. Method according to Claim 23, wherein the operations of simulating and calculating the deployment by the central planning unit comprise automatically orienting the crane to a load object.

26. Method according to Claim 23, wherein work steps can be stored.

27. Method according to Claim 23, wherein a protocol of all work steps is automatically created.

28. Method according to Claim 23, wherein the operations of simulating and calculating the deployment by the central planning unit are carried out with the aid of a physical model of the crane.

## Revendications

1. Planificateur d'utilisation de grue pour planifier une utilisation d'une grue, en particulier d'une grue sur chenilles, comprenant une unité centrale de planification, qui comporte une banque de données centrale avec des données sur les grues utilisables et un module de calcul pour calculer les moments de charge apparaissant lors de l'utilisation, la simulation et le calcul des utilisations étant réalisés par l'unité centrale de planification et l'entrée et la sortie de données s'effectuant par des clients, les clients communiquant par Internet avec l'unité centrale de planification.

2. Planificateur d'utilisation de grue selon la revendication 1, la banque de données contenant des données concernant des composants de grue utilisables pour l'équipement complémentaire des grues.

3. Planificateur d'utilisation de grue selon la revendication 2, la banque de données contenant des données géométriques en trois dimensions et des propriétés physiques des grues utilisables et des composants de grue utilisables.

4. Planificateur d'utilisation de grue selon la revendication 1, le module de calcul utilisant un modèle physique des grues utilisées et des états d'équipement de grue et définissant des moments de charge maximum pour le calcul des moments de charge apparaissant lors de l'utilisation.

5. Planificateur d'utilisation de grue selon la revendication 4, le module de calcul utilisant le même modèle physique que la limitation de moment de charge de la grue utilisée.

6. Planificateur d'utilisation de grue selon la revendication 1, l'unité de planification déterminant après l'entrée d'un cas de charge automatiquement les types de grue et états d'équipement de grue concernés.

7. Planificateur d'utilisation de grue selon la revendication 1, l'orientation de la grue pour le logement de l'objet de charge s'effectuant automatiquement après la définition de la position de grue et de la position de charge.

8. Planificateur d'utilisation de grue selon la revendication 1, un scénario simulant l'utilisation étant établi pour la planification de l'utilisation.

9. Planificateur d'utilisation de grue selon la revendication 8, la grue et d'autres objets étant positionnés dans le scénario.

10. Planificateur d'utilisation de grue selon la revendication 8 ou 9, des objets pouvant être associés à des données et attributs dans le scénario.

11. Planificateur d'utilisation de grue selon la revendication 1, l'unité de planification utilisant un modèle tridimensionnel pour la simulation de l'utilisation.

12. Planificateur d'utilisation de grue selon la revendication 1, la banque de données contenant des données tridimensionnelles d'objets perturbateurs possibles.

13. Planificateur d'utilisation de grue selon la revendication 1, des données tridimensionnelles d'objets provenant de sources externes pouvant être prises en charge.

14. Planificateur d'utilisation de grue selon la revendication 8, des objets pouvant être déplacés individuellement dans le scénario au moyen d'une interface d'entrée du client, en particulier d'une souris, ou pouvant être commandés par entrée de paramètre.

15. Planificateur d'utilisation de grue selon la revendication 11, un essai de collision entre la grue et des objets perturbateurs possibles ainsi qu'entre la grue et la charge étant effectué lors de la planification de l'utilisation.

16. Planificateur d'utilisation de grue selon la revendication 1, un circuit de charge pour l'arête perturbatrice avant et l'arête perturbatrice arrière étant déterminé et affiché en surimpression.

17. Planificateur d'utilisation de grue selon la revendication 1, une trame étant affichée en surimpression le long de l'axe médian de la flèche.

18. Planificateur d'utilisation de grue selon la revendication 1, le centre de gravité de la grue étant déterminé et affiché en surimpression.

19. Planificateur d'utilisation de grue selon la revendication 1, plusieurs vues différentes d'une étape de travail étant représentées simultanément.

20. Planificateur d'utilisation de grue selon la revendication 1, des étapes de travail individuelles ou des scénarios individuels pouvant être stockés.

21. Planificateur d'utilisation de grue selon la revendication 1, un compte-rendu de toutes les étapes de travail de l'utilisation planifiée étant élaboré de façon automatique.

22. Planificateur d'utilisation de grue selon la revendication 1, une séquence de film de plusieurs étapes de travail de l'utilisation planifiée étant élaborée.

23. Procédé pour planifier une utilisation d'une grue, en particulier d'une grue sur chenilles, comprenant un planificateur d'utilisation de grue avec une unité centrale de planification, qui comporte une banque de données centrale avec des données concernant les grues utilisables et un module de calcul pour le calcul des moments de charge apparaissant lors de l'utilisation, présentant les étapes suivantes:
entrée des données d'un cas de charge sur un client,
transmission des données du cas de charge à l'unité centrale de planification par Internet,
simulation et calcul de l'utilisation par l'unité centrale de planification,
transmission des données élaborées par l'unité de planification au client via Internet,
édition des données élaborées par l'unité de planification sur le client.

24. Procédé selon la revendication 23, la sortie des données établies par l'unité de planification sur le client comprenant une représentation en trois dimensions d'un scénario.

25. Procédé selon la revendication 23, la simulation et le calcul de l'intervention par l'unité centrale de planification comprenant une orientation automatique de la grue sur un objet de charge.

26. Procédé selon la revendication 23, des étapes de travail pouvant être mémorisées.

27. Procédé selon la revendication 23, un compte-rendu de toutes les étapes de travail étant établi automatiquement.

28. Procédé selon la revendication 23, la simulation et le calcul de l'utilisation par l'unité centrale de planification s'effectuant à l'aide d'un modèle physique de la grue.
